# EUROPÄISCHE PATENTSCHRIFT

(11) **EP 1 934 120 B1**
(45) Veröffentlichungstag und Bekanntmachung des Hinweises auf die Patenterteilung: **12.08.2009**
(21) Anmeldenummer: 06793708.6
(22) Anmeldetag: 21.09.2006
(51) Int. Cl.: B65G 1/04

(54) **LAGERREGAL MIT EINER VIELZAHL VON REGALEINHEITEN**
STORAGE RACK WITH A MULTIPLICITY OF RACK UNITS
RAYONNAGE DOTE D'UNE PLURALITE D'UNITES DE RAYONNAGE

(30) Priorität: 10.10.2005 DE 102005048379
(43) Veröffentlichungstag der Anmeldung: 25.06.2008
(73) Patentinhaber: HÄNEL & CO., CH-9450 Altstätten SG (CH)
(72) Erfinder: HÄNEL, Joachim, 74177 Bad Friedrichshall (DE)
(74) Vertreter: Preissner, Nicolaus
(86) Internationale Anmeldenummer: PCT/EP2006/066585
(87) Internationale Veröffentlichungsnummer: WO 2007/042381

(56) Entgegenhaltungen:
- EP-B1- 0 722 894
- US-B1- 6 619 902

## Beschreibung

Die vorliegende Erfindung betrifft ein Lagerregal mit einer Vielzahl von Regaleinheiten, die übereinander liegende und beabstandete Trägerauflagen aufweisen, die paarweise an sich gegenüberliegenden Seitenwänden der Regaleinheiten zur Bildung eines Lagerplatzes für einen Lagergutträger angeordnet sind, wobei der Lagergutträger mittels einer steuerbaren Transportvorrichtung den Lagerplätzen zustellbar oder entnehmbar ist. Die Transportvorrichtung weist wenigstens ein erstes Transportmittel auf, das in der Vertikalrichtung verfahrbar ist, und ein zweites Transportmittel, das sich auf dem ersten Transportmittel abstützt und bezüglich dem ersten Transportmittel in einer ersten Horizontalrichtung verfahrbar ist.

Aus der EP 0 722 894 B1 ist ein Lagerregal bekannt, das zwei mit Abstand zueinander angeordnete Regaleinheiten aufweist, zwischen denen eine Transportvorrichtung vorgesehen ist, mit der ein Lagergutträger in Vertikalrichtung verfahrbar ist. Die Regaleineinheiten weisen jeweils parallel zueinander ausgerichtete Seitenwände auf, die an beabstandeten vertikalen Regalständern festgelegt sind. An den Seitenwänden befindet sich eine Vielzahl von übereinander liegenden und beabstandeten Trägerauflagen zur Bildung von Lagerplätzen für Lagergutträger. Die Trägerauflagen sind als in die Seitenwände integrierte und eingeformte Auflagestege ausgebildet. An einer Stirnseite einer Regaleinheit ist eine Entnahmeöffnung vorgesehen, durch die der Lagergutträger bis in den Bereich der Transportvorrichtung geschoben werden kann. Nachdem sich der Lagergutträger auf der Transportvorrichtung befindet, kann diese in Vertikalrichtung bis in die gewünschte Höhe verfahren werden. Nach Erreichen der Zielhöhe wird der Lagergutträger in Querrichtung in seine endgültige Lagerposition verfahren.

Die US 6,619,902 B1 offenbart ein Lagerregal mit einer Vielzahl von Regaleinheiten gemäß dem Oberbegriff des Anspruchs 1. Ein Lagergutträger ist mittels einer steuerbaren Transportvorrichtung den verschiedenen Lagerplätzen in den Regaleinheiten zustell- oder entnehmbar. Die Transportvorrichtung weist ein erstes Transportmittel auf, das in der Vertikalrichtung verfahrbar ist. Ferner ist ein zweites Transportmittel vorgesehen, das sich auf dem ersten Transportmittel abstützt und bezüglich diesem in einer Horizontalrichtung verfahrbar ist.

Weiterhin sind im Stand der Technik Lagerregale bekannt, bei denen eine Vielzahl von Regaleinheiten nebeneinander angeordnet sind und die Lagergutträger mittels einer Transportvorrichtung in allen drei Raumrichtungen verfahrbar sind. Dabei weist die Transportvorrichtung ein erstes in der Vertikalrichtung verfahrbares Transportmittel auf, das einen sich in der Horizontalrichtung erstreckenden Träger umfasst. Ein zweites Transportmittel stützt sich auf dem ersten Transportmittel ab und ist bezüglich diesem in einer ersten Horizontalrichtung verfahrbar.

Der Erfindung liegt die **Aufgabe** zugrunde, ein Lagerregal zu schaffen, bei dem eine Anpassung des Lagerregals an veränderte Raumsituationen in einfacher Weise möglich ist.

Zur **Lösung** dieser Aufgabe ist ein Lagerregal mit den eingangs genannten Merkmalen in Übereinstimmung mit Patentanspruch 1 erfindungsgemäß dadurch gekennzeichnet, dass das erste Transportmittel aus mehreren lösbar miteinander verbundenen Modulen besteht, deren Anzahl in Abhängigkeit von der Anzahl der Regaleinheiten variierbar ist.

Das erfindungsgemäße Lagerregal beruht auf der Erkenntnis, dass mittels eines in Modulbauweise aufgebauten ersten Transportmittels ein nachträglich in der Längsrichtung erweiterbares oder reduzierbares Lagerregal geschaffen wird. Hierdurch lässt sich das Lagerregal in einfacher Weise an eine veränderte Raumsituation anpassen.

Vorteilhafte Ausgestaltungen des erfindungsgemässen Lagerregals sind in den abhängigen Ansprüchen beansprucht.

Vorteilhaft weist das erste Transportmittel wenigstens einen sich in der ersten Horizontalrichtung (X) erstreckenden Träger auf, der aus mehreren Trägermodulen besteht. Die Trägermodule sind vorteilhaft miteinander verschraubt. Hierdurch kann der Träger in einfacher Weise einer veränderten Anzahl von Regaleinheiten angepasst werden.

In vorteilhafter Ausgestaltung weist das erste Transportmittel wenigstens ein Vorspannelement auf, das aus mehreren Vorspannmodulen und wenigstens einem Spannschloss besteht. Mittels einen derartigen Vorspannung lassen sich große Spannweiten für das erste Transportmittel erreichen. Mittels der Vorspannmodule kann das Vorspannelement in einfacher Weise an unterschiedlich lange Träger angepasst werden.

Ferner erweist es sich als vorteilhaft, wenn das Vorspannelement zumindest abschnittsweise beabstandet von dem Träger verläuft. Eine derartige externe Vorspannung, bei der das Vorspannelement größtenteils außerhalb des Trägerquerschnitts angeordnet ist, übt infolge des durch den Abstand zum Träger gebildeten Hebelarms eine Druckkraft aus, die zu einer Überdrückung der Zugzone des Trägers führen kann

In weiterer vorteilhafter Ausgestaltung ist das zweite Transportmittel mittels eines Zahnradantriebes verfahrbar, der mindestens eine Zahnstange aufweist, die aus mehreren Zahnstangenmodulen besteht. Hierdurch kann der Zahnstangenabtrieb in einfacher Weise an eine unterschiedliche Anzahl von Regaleinheiten angepasst werden.

Vorteilhaft ist das erste Transportmittel mittels eines Kettenantriebes verfahrbar, der wenigstens eine Antriebswelle aufweist, deren Länge der Breite des Lagerregals angepasst ist. Zur Anpassung an Lagerregale mit unterschiedlicher Länge kommen unterschiedlich lange Antriebswellen zum Einsatz.

In vorteilhafter Ausgestaltung besteht die Vielzahl von Regaleinheiten aus beabstandeten Regalendmodulen, zwischen denen Regalzwischenmodule angeordnet sind. Durch Hinzufügen oder Wegnahme von Regalzwischenmodulen zwischen die verbleibenden Regalendmodule kann in einfacher Weise die Länge des Lagerregals variiert werden.

In vorteilhafter Weiterbildung ist das zweite Transportmittel mittels Rädern an dem ersten Transportmittel geführt.

Vorteilhaft weist das zweite Transportmittel eine Tragplatte auf, die sich auf einem Fahrgestell abstützt und bezüglich diesem in einer zweiten Horizontalrichtung (Y) verfahrbar ist. Durch das Verfahren der Tragplatte in der zweiten Horizontalrichtung (Y) wird eine sichere Zustellung und Entnahme der Lagergutträger gewährleistet.

Um die durch die Bewegung der Transportmittel möglicherweise auftretenden Schwingungen möglichst gering zu halten, ist vorteilhaft das erste Transportmittel mittels wenigstens eines Rades an wenigstens einer Regaleinheit geführt.

Um eine steife Konstruktion der Seitenwände zu ermöglichen, sind die Trägerauflagen mäanderförmig in die Seitenwände eingepresst. Die Seitenwände sind insbesondere aus Stahlblech hergestellt und zweckmäßigerweise mit vertikalen Ständern verschweisst.

Von Vorteil ist ferner, wenn im Bereich der Bedienöffnung eine Höhenmesseinrichtung zur Höhenmessung des Lagerguts vorgesehen ist. Die Höhenmesseinrichtung ermittelt die Anzahl der für die Lagerung des Lagerguts notwendigen Höheneinheiten. Das Messsignal der Höhenmesseinrichtung wird einer Steuereinheit der Transportvorrichtung zugeführt, die in Abhängigkeit von der Belegung des Lagerregals und der Höhe des Lagerguts die Lagergutträger zu einem geeigneten Lagerplatz verfährt und zustellt.

Nachfolgend wird die Erfindung unter Bezugnahme auf die Zeichnungen weiter erläutert. Dabei zeigen schematisch:
- Fig. 1: eine perspektivische Darstellung des erfindungsgemässen La- gerregals mit einer Transportvorrichtung;
- Fig. 2: einen Querschnitt gemäss der Linie II-II in Fig. 1 durch die Transportvorrichtung;
- Fig. 3: einen Querschnitt gemäss der Linie III-III in Fig. 1 durch die Transportvorrichtung;
- Fig. 4: eine Ansicht von oben auf das erste Transportmittel, und
- Fig. 5: eine Seitenansicht des ersten Transportmittels der Transport- vorrichtung.

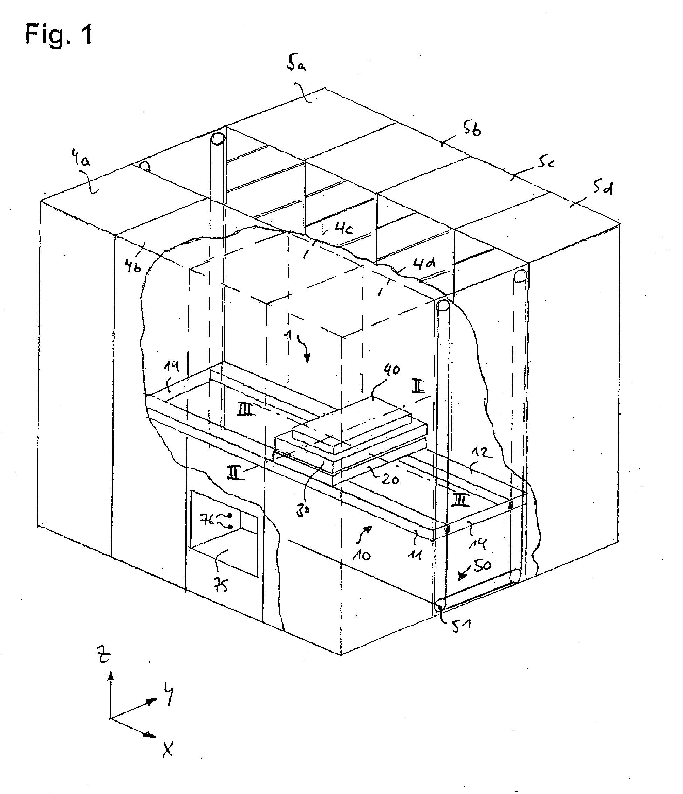

Fig. 1 zeigt den schematischen Aufbau eines erfindungsgemässen Lagerregals mit acht Regaleinheiten 4, 5, wobei in einer ersten Reihe vier Regaleinheiten 4a, 4b, 4c, 4d und in einer zweiten Reihe vier Regaleinheiten 5a, 5b, 5c, 5d nebeneinander angeordnet sind. Zwischen den beiden Reihen ist eine Transportvorrichtung 1 für die Lagergutträger 40 angeordnet. In jeder der Regaleinheiten 4, 5 ist eine Vielzahl von übereinander angeordneten Lagerplätzen 3 zur Aufnahme von auf Lagergutträgern 40 gelagertem Lagergut 2 vorhanden.

Zur Lagerung der Lagergutträger 40 in den einzelnen Lagerplätzen 3 weisen die Regaleinheiten 4, 5 Seitenwände 70 mit paarweise gegenüberliegenden Trägerauflagen 72 auf. Die aus Stahlblech gebildeten Seitenwände 70 sind jeweils an Ständer 71 angeschweisst, vorzugsweise mittels Buckelschweisstechnik.

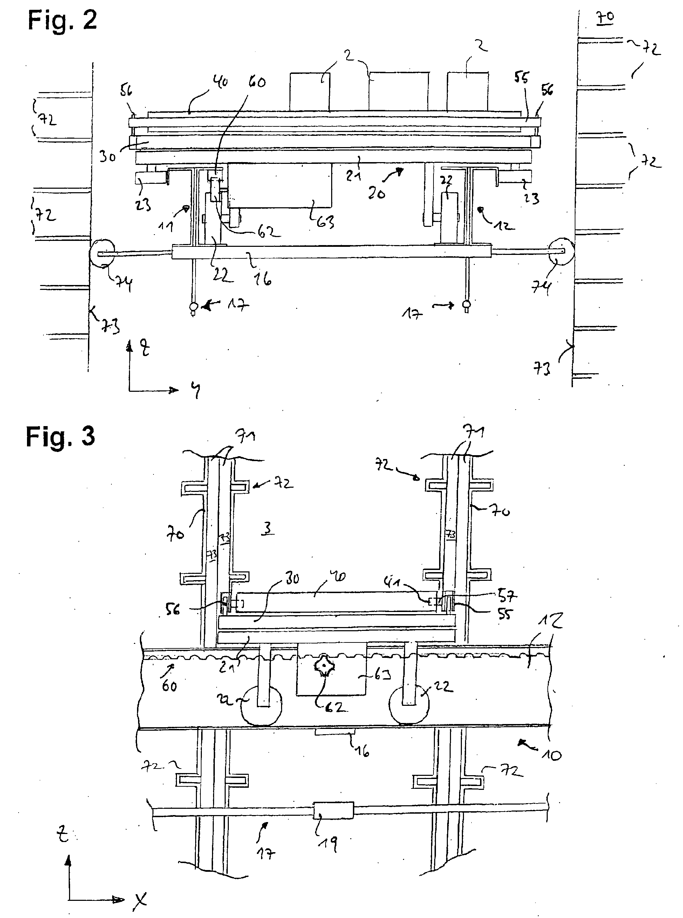

Wie aus Fig. 3 hervorgeht, sind die Trägerauflagen 72 in der jeweiligen Seitenwand 70 integriert und in diese mäanderförmig eingepresst. Dadurch wird eine vergleichsweise steife Ausbildung der Seitenwände 70 gewährleistet. Um ein leichtes Einführen der Lagergutträger 40 in die Lagerplätze 3 zu ermöglichen, weisen die Trägerauflagen 72 an der zur Transportvorrichtung 1 gerichteten Seite einen sich verjüngenden Querschnitt auf (nicht dargestellt).

Fig. 1 zeigt zudem eine Bedienöffnung 75, die es ermöglicht, das Lagerregal mit den Lagergutträgern 40 zu beschicken beziehungsweise die Lagergutträger 40 aus dem Lagerregal zu entnehmen. Um eine optimale Lagerplatznutzung zu erreichen, ist im Bereich der Bedienöffnung 75 eine Höhenmesseinrichtung 76 zur Höhenmessung des Lagerguts 2 vorgesehen. Die Höhenmesseinrichtung 76 ist mit mehreren Lichtschranken ausgestattet, die in einem dem Abstand der übereinander liegenden Trägerauflagen 72 entsprechenden Abstand voneinander beabstandet sind, so dass die Anzahl der erforderlichen Höheneinheiten zur Lagerung des Lagerguts 2 ermittelbar ist.

Eine Steuereinheit ermittelt einen oder mehrere geeignete Lagerplätze 3 und transportiert den Lagergutträger 40 zu dem zuvor von der Steuereinheit ermittelten Lagerplatz 3.

Zur Zustellung oder Entnahme des Lagergutträgers 40 ist die steuerbare Transportvorrichtung so eingerichtet, dass der Lagergutträger 40 in einer ersten Raumrichtung Z, in einer zweiten Raumrichtung X und in einer dritten Raumrichtung Y transportierbar ist. Die drei Raumrichtungen X, Y, Z stehen im vorliegenden Ausführungsbeispiel rechtwinklig zueinander. Im Folgenden wird die Raumrichtung Z auch als Vertikalrichtung, die Raumrichtung X auch als Längsrichtung und die Raumrichtung Y auch als Querrichtung bezeichnet.

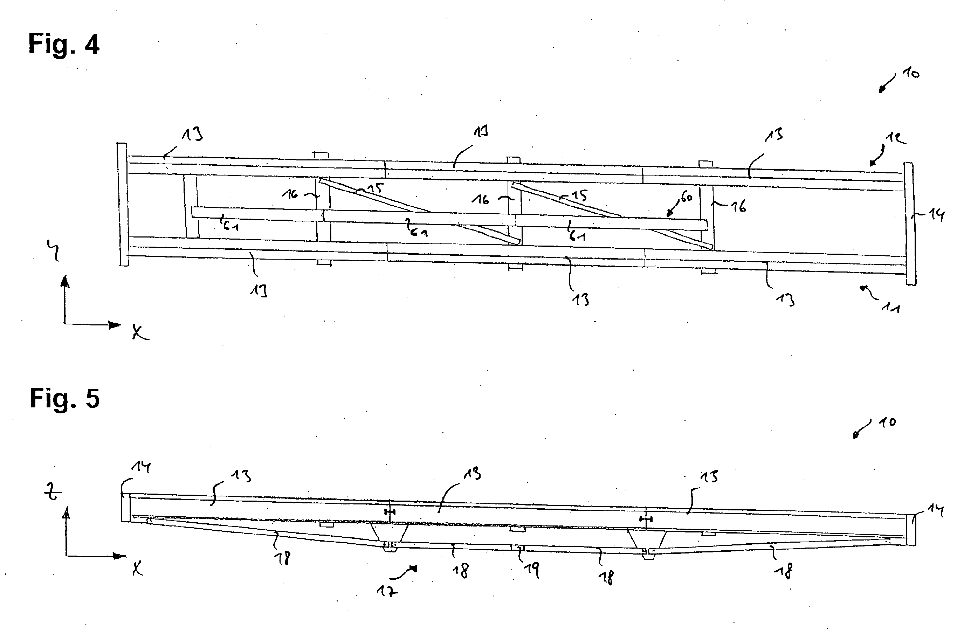

Um den Transport des Lagergutträgers 40 in die Vertikal-, Längs- und Querrichtung zu ermöglichen, weist die Transportvorrichtung 1 ein erstes Transportmittel 10 und ein zweites Transportmittel 20 auf. Das erste Transportmittel 10 ist mittels eines ersten Antriebes in der ersten Vertikalrichtung Z verfahrbar und weist zwei parallel zueinander ausgerichtete Träger 11, 12 auf. Wie die Fig. 4 und 5 zeigen, ist jeder Träger 11, 12 aus drei miteinander verschraubten Trägermodulen 13 zusammengesetzt. Hierdurch wird eine lösbare Verbindung zwischen den Trägermodulen 13 geschaffen.

Das erste Transportmittel 10 weist zwei Vorspannelemente 17 auf, die sich an der Unterseite der Träger 11,12 erstrecken. Jedes Vorspannelement 17 weist vier Vorspannmodule 18 in Form von Zugstangen auf. Im mittleren Bereich des Vorspannelements 17 ist ein Spannschloss 19 zur Regulierung der durch das Vorspannelement 17 zu erzeugenden Vorspannung vorgesehen. Die Spannkraftjustierung kann aber zusätzlich oder alternativ auch in den Endbereichen der Endmodule des Vorspannelements 17 erfolgen.

Das Vorspannelement 17 verläuft im mittleren Bereich in einem Abstand von dem Träger 11, 12. So kann infolge des sich ergebenden Hebelarms ein Drehmoment erzeugt werden, das entgegen gesetzt zu dem durch das Eigengewicht der Transportvorrichtung 1 und den Lagergutträger 40 inklusive Lagergut 2 erzeugte Drehmoment wirkt. Dies führt zu einer Verringerung der Durchbiegung des Trägers 11, 12 und ermöglicht eine grössere Lastaufnahme des Trägers 11, 12 im Vergleich zu einem Träger 11, 12 ohne Vorspannelement 17.

Bei der Montage der Träger 11, 12 werden die einzelnen Trägermodule 13 miteinander verschraubt. An der Unterseite der Träger 11, 12 wird an den Verbindungsstellen der Trägermodule 13 jeweils ein Verbindungsarm angeordnet. An dem Endbereich des Verbindungsarm wird das Vorspannelement 17 mit Abstand von dem Träger 11, 12 festgelegt. Ferner weist das erste Transportmittel 10 zwei schräg verlaufende Aussteifungselemente 15 und zwei in den Endbereichen der Träger 11, 12 vorgesehene Querträger 14 auf.

Aus Fig. 1 ist weiterhin zu erkennen, dass das erste Transportmittel 10 mit einem Antrieb ausgestattet ist, der insgesamt vier Kettenantriebe mit jeweils einer Kette 50 und zwei Antriebswellen 51 aufweist, die von einem nicht dargestellten Antriebsmotor horizontal abragen. Um eine Anpassung an unterschiedliche Längen des Lagerregals zu ermöglichen, kommen Antriebswellen 51 unterschiedlicher Länge zum Einsatz.

Um während der Bewegung des ersten Transportmittels 10 ein Schwenken der Träger 11, 12 in Querrichtung Y zu vermeiden, sind an den Querträgern 11, 12 und den Streben 16 mehrere Räder 74 vorgesehen, die sich an den Vertikalträgern der Regaleinheiten 4,5 abstützen.

Wie aus den Fig. 1 bis 3 hervorgeht, weist das zweite Transportmittel 20 ein Fahrgestell 21 auf, das die Tragplatte 30 abstützt. Um eine Verfahrbarkeit des zweiten Transportmittels 20 in die erste Raumrichtung X zu ermöglichen, sind ein Zahnstangenantrieb sowie mehrere Räder 22 vorgesehen, die sich an der ersten Transporteinrichtung 10 abstützen.

Der Zahnstangenantrieb umfasst eine aus mehreren Zahnstangenmodulen 61 gebildete Zahnstange 60, ein mit der Zahnstange 60 zusammenwirkendes Zahnrad 62 und einen Motor 63 für den Antrieb des Zahnrades 62. Durch die Modulbauweise der Zahnstange 60 kann diese ebenfalls an ein erstes Transportmittel 10 mit unterschiedlicher Länge angepasst werden. Die Zahnstangenmodule 61 sind auf den Streben 16 des ersten Transportmittels 10 gelagert. Das Zahnrad 62 und der Motor 63 sind so an dem Fahrgestell 21 angebracht, dass die Zähne des Zahnrades 62 mit den Zähnen der Zahnstange 60 in Eingriff gelangen können.

Zur Führung des zweiten Transportmittels 20 dienen zum einen die Räder 22, die um eine parallel zur Querrichtung Y ausgerichtete Achse drehbar sind und auf dem Flansch des Trägers 11, 12 verfahrbar sind. Zusätzliche Räder 23 greifen an vertikal ausgerichteten Flanschen des Trägers 11, 12 an, drehen sich um eine parallel zur Vertikalrichtung Z ausgerichtete Achse, und dienen als seitliche Führung des Fahrgestells 21 an den Trägern 11, 12.

Die Tragplatte 30 ist so auf dem Fahrgestell 21 gelagert, dass sie zusammen mit dem darauf befindlichen Lagergutträger 40 in der zweiten Raumrichtung Y verfahrbar ist. Um dies zu ermöglichen, ist vorzugsweise wiederum ein Zahnradantrieb vorgesehen (nicht dargestellt). So kann der Motor für den Antrieb dieses Zahnrades beispielsweise, wie in Fig. 3 dargestellt, neben dem Motor 63 auch an der Unterseite des Fahrgestells 21 montiert sein.

Bei dem hier erläuterten Ausführungsbeispiel ist vorgesehen, dass die Tragplatte 30 relativ zu dem Fahrgestell 21 um eine vergleichsweise kurze Distanz in der zweiten Raumrichtung Y verfahrbar ist. Dies dient im Wesentlichen dazu, die Tragplatte 30 aus dem Bereich der eingelagerten lagergutträger 40 zu verfahren (siehe Fig. 2). Gemäss dem Ausführungsbeispiel wird die Tragplatte 30 um einen Abstand von etwa 40 bis 50 mm in die zweite Raumrichtung Y verfahren. Alternativ kann dieser Abstand aber durchaus auch grösser sein.

Um den Lagergutträger 40 zu dem vorbestimmten Lagerplatz 3 zu befördern, ist die Tragplatte 30 mit zwei Kettenantrieben versehen, die jeweils eine Kette 55 und zwei Antriebswellen 56 umfassen. Dabei sind die Ketten 55 stehend angeordnet, das heisst die Antriebswellen 56 drehen sich um eine parallel zur Vertikalrichtung Z ausgerichtete Achse. An jeder Kette 55 ist ein Mitnehmer 57 angebracht, der in eine jeweilige Ausnehmung 41 des Lagergutträgers 40 eingreifen kann. Bei Eingreifen der Mitnehmer 57 in die Ausnehmungen 41 kann der Lagergutträger 40 dann mit Hilfe des Kettenantriebs und einer Gleitführung auf der Tragplatte 30 (nicht dargestellt) so in die zweite Raumrichtung Y verschoben werden, dass der Lagergutträger 40 auf einem Paar Trägerauflagen 72 zu liegen kommt.

Die beschriebene Ausführungsform zeichnet sich insbesondere dadurch aus, dass das Lagerregal durch Einfügen oder Entfernen von Regalzwischenmodulen 4b,4c, 5b, 5c in Längsrichtung X variabel ist und somit in einfacher Weise an veränderte Raumsituationen anpassbar ist. Dies wird insbesondere durch die Modulbauweise des ersten Transportmittels 10 ermöglicht. Zur Anpassung an eine unterschiedliche Anzahl von Regaleinheiten 4,5 kann die Länge der Träger 11,12 mittels der Trägermodule 13 in einfacher Weise variiert werden. Weiterhin kann das Vorspannelement 17 und die Zahnstange 60 aufgrund ihrer Modulbauweise in der Länge variiert werden. Die Anpassung im Bereich der Antriebswellen 51 wird durch unterschiedlich lange Antriebswellen 51 realisiert.

Es wird ausdrücklich angemerkt, dass das erläuterte Ausführungsbeispiel nur eine mögliche Ausführungsform darstellt und somit auch weitere Ausführungsformen unter Verwendung ausgewählter einzelner Bauteile, insbesondere der Transportvorrichtung, denkbar sind.

### Bezugszeichenliste

- 1: Transportvorrichtung
- 2: Lagergut
- 3: Lagerplatz
- 4: Regaleinheit
- 5: Regaleinheit

- 10: erstes Transportmittel
- 11: Träger
- 12: Träger
- 13: Trägermodul
- 14: Querträger
- 15: Aussteifungselement
- 16: Strebe
- 17: Vorspannelement
- 18: Vorspannmodul
- 19: Spannschloss

- 20: zweites Transportmittel
- 21: Fahrgestell
- 22: Rad
- 23: Rad

- 30: Tragplatte
Verbindungsarm
- 40: Lagergutträger
- 41: Ausnehmung

- 50: Kette
- 51: Antriebswelle
- 55: Kette
- 56: Antriebswelle
- 57: Mitnehmer

- 60: Zahnstange
- 61: Zahnstangenmodul
- 62: Zahnrad
- 63: Motor

- 70: Seitenwand
- 71: Ständer
- 72: Trägerauflagen
- 73: Stirnfläche
- 74: Rad
- 75: Bedienöffnung
- 76: Höhenmesseinrichtung

- Z: Vertikalrichtung
- X: erste Horizontalrich- tung/Längsrichtung
- Y: zweite Horizontalrichtung/ Querrichtung

## Patentansprüche

1. Lagerregal mit einer Vielzahl von Regaleinheiten (4, 5), die übereinander liegende und beabstandete Trägerauflagen (72) aufweisen, die paarweise an sich gegenüberliegenden Seitenwänden (70) der Regaleinheiten (4, 5) zur Bildung eines Lagerplatzes (3) für einen Lagergutträger (40) angeordnet sind, wobei der Lagergutträger (40) mittels einer steuerbaren Transportvorrichtung (1) den Lagerplätzen (3) zustellbar oder entnehmbar ist, wobei die Transportvorrichtung (1) wenigstens ein erstes Transportmittel (10) aufweist, das in der Vertikalrichtung (Z) verfahrbar ist, und ein zweites Transportmittel (20) aufweist, das sich auf dem ersten Transportmittel (10) abstützt und bezüglich dem ersten Transportmittel (10) in einer ersten Horizontalrichtung (X) verfahrbar ist, **dadurch gekennzeichnet, dass** das erste Transportmittel (10) aus mehreren lösbar miteinander verbundenen Modulen (13, 18, 61) besteht, deren Anzahl in Abhängigkeit von der Anzahl der Regaleinheiten (4, 5) variierbar ist.

2. Lagerregal nach Anspruch 1, **dadurch gekennzeichnet, dass** das erste Transportmittel (10) wenigstens einen sich in der ersten Horizontalrichtung (X) erstreckenden Träger (11, 12) aufweist, der aus mehren Trägermodulen (13) besteht.

3. Lagerregal nach Anspruch 1 oder 2, **dadurch gekennzeichnet, dass** das erste Transportmittel (10) wenigstens ein Vorspannelement (17) aufweist, das aus mehreren Vorspannmodulen (18) und wenigstens einem Spannschloss (19) besteht.

4. Lagerregal nach Anspruch 3, **dadurch gekennzeichnet, dass** das Vorspannelement (17) zumindest abschnittsweise beabstandet von dem Träger (11, 12) des ersten Transportmittels (10) verläuft.

5. Lagerregal nach einem der Ansprüche 1 bis 4, **dadurch gekennzeichnet, dass** das zweite Transportmittel (20) mittels eines Zahnradantriebes (60, 62, 63) verfahrbar ist, der mindestens eine Zahnstange (60) aufweist, die aus mehreren Zahnstangenmodulen (61) besteht.

6. Lagerregal nach einem der Ansprüche 1 bis 5, **dadurch gekennzeichnet, dass** das erste Transportmittel (10) mittels eines Kettenantriebes (50) verfahrbar ist, der wenigstens eine Antriebswelle (51) aufweist, deren Länge der Breite des Lagerregals angepasst ist.

7. Lagerregal nach einem der Ansprüche 1 bis 6, **dadurch gekennzeichnet, dass** die Vielzahl von Regaleinheiten (4,5) aus beabstandeten Regalendmodulen (4a, 5a, 4d, 5d) besteht, zwischen denen Regalzwischenmodule (4b, 5b, 4c, 5c) angeordnet sind.

8. Lagerregal nach einem der Ansprüche 1 bis 7, **dadurch gekennzeichnet, dass** das zweite Transportmittel (20) mittels Räder (22, 23) an dem ersten Transportmittel (10) geführt ist.

9. Lagerregal nach einem der Ansprüche 1 bis 8, **dadurch gekennzeichnet, dass** das zweite Transportmittel (20) eine Tragplatte (30) aufweist, die sich auf einem Fahrgestell (21) abstützt und bezüglich diesem in einer zweiten Horizontalrichtung (Y) verfahrbar ist.

10. Lagerregal nach einem der Ansprüche 1 bis 9, **dadurch gekennzeichnet, dass** das erste Transportmittel (10) mittels wenigstens eines Rades (74) an wenigstens einer Regaleinheit (4, 5) geführt ist.

11. Lagerregal nach einem der Ansprüche 1 bis 10, **dadurch gekennzeichnet, dass** die Trägerauflagen (72) mäanderförmig in die Seitenwände (70) eingepresst sind.

12. Lagerregal nach einem der Ansprüche 1 bis 11, **dadurch gekennzeichnet, dass** wenigstens eine Bedienöffnung (75) zur Beschickung und Entnahme des Lagerguts (2) vorgesehen ist und im Bereich der Bedienöffnung (75) eine Höhenmesseinrichtung (76) zur Höhenmessung des Lagerguts (2) vorgesehen ist.

## Claims

1. A storage rack, comprising a plurality of rack units (4, 5) having spaced carrier supports (72) arranged one above the other and in pairs at opposite side walls (70) of the rack units (4, 5) to form a storage space (3) for a storage product carrier (40), wherein the storage product carrier (40) is supplyable to or withdrawable from the storage spaces (3) by means of a controllable transporting apparatus (1), wherein the transporting apparatus (1) has at least one first transporting means (10) traversable in the vertical direction (Z), and a second transporting means (20) supported on the first transporting means (10) and traversable in relation to the first transporting means (10) in a first horizontal direction (X), **characterised in that** the first transporting means (10) consists of a plurality of releasably joined modules (13, 18, 61) variable in number as a function of the number of rack units (4, 5).

2. The storage rack according to claim 1, **characterised in that** the first transporting means (10) comprises at least one beam (11, 12) extending in the first horizontal direction (X) and consisting of a plurality of beam modules (13).

3. The storage rack according to claim 1 or 2, **characterised in that** the first transporting means (10) comprises at least one prestressing element (17) consisting of a plurality of prestressing modules (18) and at least one turnbuckle (19).

4. The storage rack according to claim 3, **characterised in that** the prestressing element (17) extends at least partially at a distance from the beam (11, 12) of the first transporting means (10).

5. The storage rack according to any one of claims 1 to 4, **characterised in that** the second transporting means (20) is traversable by means of a gear drive (60, 62, 63) comprising at least one toothed rack (60) consisting of a plurality of toothed rack modules (61).

6. The storage rack according to any one of claims 1 to 5, **characterised in that** the first transporting means (10) is traversable by means of a chain drive (50) comprising at least one drive shaft (51) having a length adapted to the width of the storage rack.

7. The storage rack according to any one of claims 1 to 6, **characterised in that** the plurality of rack units (4, 5) consists of spaced terminal rack modules (4a, 5a, 4d, 5d), between which intermediate rack modules (4b, 5b, 4c, 5c) are arranged.

8. The storage rack according to any one of claims 1 to 7, **characterised in that** the second transporting means (20) is guided on the first transporting means (10) by means of wheels (22, 23).

9. The storage rack according to any one of claims 1 to 8, **characterised in that** the second transporting means (20) comprises a carrying plate (30) supported on a chassis (21) and traversable in relation to the latter in a second horizontal direction (Y).

10. The storage rack according to any one of claims 1 to 9, **characterised in that** the first transporting means (10) is guided at at least one rack unit (4, 5) by means of at least one wheel (74).

11. The storage rack according to any one of claims 1 to 10, **characterised in that** the carrier supports (72) are pressed into the side walls (70) in a meandering fashion.

12. The storage rack according to any one of claims 1 to 11, **characterised in that** at least one operating opening (75) is provided for filling and withdrawing the storage product (2), and **in that** a height measuring device (76) is provided in the area of the operating opening (75) for measuring the height of the storage product (2).

## Revendications

1. Rayonnage de stockage comprenant une pluralité d'unités de rayonnage (4, 5) qui comprennent des plates-formes de support (72) disposées les unes au-dessus des autres et écartées les unes des autres, qui sont agencées par paires sur des parois latérales (70) mutuellement opposées des unités de rayonnages (4, 5) pour réaliser un emplacement de stockage (3) pour un support (40) destiné à des produits à stocker, le support (40) pour les produits à stocker pouvant être amené aux emplacements de stockage (3) ou enlevé hors de ceux-ci au moyen d'un dispositif de transport commandé (1), ledit dispositif de transport (1) comprenant au moins un premier moyen de transport (10) déplaçable en direction verticale (Z), et un second moyen de transport (20) qui s'appuie sur le premier moyen de transport (10) et qui est déplaçable par rapport au premier moyen de transport (10) dans une première direction horizontale (X), **caractérisé en ce que** le premier moyen de transport (10) est constitué de plusieurs modules (13, 18, 61) reliés les uns aux autres de façon détachable, dont le nombre peut être varié en fonction du nombre des unités de rayonnages (4, 5).

2. Rayonnage de stockage selon la revendication 1, **caractérisé en ce que** le premier moyen de transport (10) comprend au moins un support (11, 12) s'étendant dans la première direction horizontale (X), constitué de plusieurs modules de support (13).

3. Rayonnage de stockage selon la revendication 1 ou 2, **caractérisé en ce que** le premier moyen de transport (10) comprend au moins un élément de précontrainte (17), qui est constitué par plusieurs modules de précontrainte (18) et par au moins une serrure de serrage (19).

4. Rayonnage de stockage selon la revendication 3, **caractérisé en ce que** l'élément de précontrainte (17) s'étend au moins par tronçons à distance du support (11, 12) du premier moyen de transport (10).

5. Rayonnage de stockage selon l'une des revendications 1 à 4, **caractérisé en ce que** le second moyen de transport (20) est déplaçable au moyen d'un entraînement à engrenages (60, 62, 63), qui comprend au moins une crémaillère (60) constituée de plusieurs modules de crémaillère (61).

6. Rayonnage de stockage selon l'une des revendications 1 à 5, **caractérisé en ce que** le premier moyen de transport (10) est déplaçable au moyen d'un entraînement à chaîne (50), celui-ci comprenant au moins un arbre d'entraînement (51) dont la longueur est ajustée à la largeur du rayonnage de stockage.

7. Rayonnage de stockage selon l'une des revendications 1 à 6, **caractérisé en ce que** la pluralité d'unités de rayonnage (4, 5) sont constituées de modules de rayonnage terminaux (4a, 5a, 4d, 5d) écartés les uns des autres, entre lesquels sont agencés des modules de rayonnage intermédiaires (4b, 5b, 4c, 5c).

8. Rayonnage de stockage selon l'une des revendications 1 à 7, **caractérisé en ce que** le second moyen de transport (20) est guidé sur le premier moyen de transport (10) au moyen de roues (22, 23).

9. Rayonnage de stockage selon l'une des revendications 1 à 8, **caractérisé en ce que** le second moyen de transport (20) comprend une plaque-support (30), laquelle s'appuie sur un châssis mobile (21) et est déplaçable par rapport à celui-ci dans une seconde direction horizontale (Y).

10. Rayonnage de stockage selon l'une des revendications 1 à 9, **caractérisé en ce que** le premier moyen de transport (10) est guidé sur au moins une unité de rayonnage (4, 5) au moyen d'au moins une roue (74).

11. Rayonnage de stockage selon l'une des revendications 1 à 10, **caractérisé en ce que** les plates-formes de support (72) sont pressées en forme de méandres dans les parois latérales (70).

12. Rayonnage de stockage selon l'une des revendications 1 à 11, **caractérisé en ce qu'**il est prévu au moins une ouverture de service (75) pour le chargement et l'enlèvement des produits à stocker (2), et **en ce qu'**il est prévu un système de mesure de hauteur (76) dans la région de l'ouverture de service (75) pour la mesure de la hauteur des produits à stocker (2).
